(19) Europäisches Patentamt
European Patent Office
Office européen des brevets

(11) Publication number: 0 011 484 B1

(12) **EUROPEAN PATENT SPECIFICATION**

(45) Date of publication of patent specification: 28.09.83

(51) Int. Cl.³: C 22 B 3/00, B 01 J 20/32, C 07 F 7/08

(21) Application number: 79302565.1

(22) Date of filing: 14.11.79

(54) **Removal of metals from solution.**

(30) Priority: 15.11.78 GB 4464278

(43) Date of publication of application: 28.05.80 Bulletin 80/11

(45) Publication of the grant of the patent: 28.09.83 Bulletin 83/39

(84) Designated Contracting States: BE DE FR GB IT NL

(56) References cited:
DE - A - 2 522 812
FR - A - 2 230 405
FR - A - 2 275 252
FR - A - 2 383 690
GB - A - 1 530 039
US - A - 3 664 967

The file contains technical information submitted after the application was filed and not included in this specification

(73) Proprietor: The British Petroleum Company p.l.c.
Britannic House Moor Lane
London EC2Y 9BU (GB)

(72) Inventor: Hancock, Ronald David
The British Petroleum Company Limited
Chertsey Road
Sunbury-on-Thames Middlesex, TW16 7LN (GB)
Inventor: Kirk, Jennie Marie The British Petroleum Company Limited Chertsey Road
Sunbury-on-Thames Middlesex, TW16 7LN (GB)

(74) Representative: MacLeod, Malcolm et al,
BP INTERNATIONAL LIMITED Patents and Licensing Division Chertsey Road
Sunbury-on-Thames Middlesex, TW16 7LN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 011 484 B1

# Removal of metals from solution

The present invention relates to the removal of metals from solution and in particular to the removal of calcium, iron, copper, rhodium, silver, mercury and uranium from solution.

As a result of previous refining processes, traces of copper are sometimes present in distillate fuels such as automotive and aviation gasolines and aviation kerosines. Copper is undesirable because it is an oxidation catalyst which promotes the formation of gums and resins which affect the performance of an engine. It is current practice to combat the adverse effect of copper by adding a copper deactivator to the fuel.

When mercury is employed in processing operations it is necessary owing to its toxic nature to reduce to a minimum the quantities that are discharged to the environment in whatever form, including liquid effluents that are discharged to water courses. This is of particular importance in the manufacture of chlorine and caustic soda by the electrolysis of brine in mercury cathode electrolytic cells where the depleted brine leaving the cells contains a small concentration of mercury, usually between 2 and 10 mg/litre, either in the form of elemental mercury or mercury compounds. If this depleted brine is discharged to waste the value of the lost mercury is significant and the receiving water course may be polluted with mercury compounds to an unacceptable level.

In the photographic industry it is desirable on economic grounds to remove and recover silver from residues.

Other situations in which it is desirable or essential to remove soluble metal ions from solution include the softening of water, i.e., the removal of calcium ions, and the hydrometallurgical processing of mineral ores and metal concentrates.

FR—A—2275252 discloses a method of chemically modifying the surface of an inorganic solid having reactive hydroxyl groups thereon, which comprises reacting, under dry conditions and in the presence of a primary amine or organic sulphonic acid catalyst, the surface of the said solid with an alkyl, aryl or aralkyl-substituted alkoxysilane, at least one of the said alkyl, aryl- or aralkyl substituents containing one or more functional groups which are:—

$-SO_3H$, $-SH$, $-OH$ $-CN$,

$-NO_2$ $-COOH$,

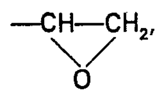

$-CH{=}CH_2$, $-SO-R$, $-NR_2$

$-OR$ and/or $-SR$

wherein R is an alkyl group, whereby the said reactive hydroxyl groups react with the alkoxy groups of the said silane.

With particular reference to the sulphonic acid, FR—A—2275252 teaches that the sulphonate salt may be an intermediate in the formation of the sulphonic acid which can be an ion exchanger.

GB—A—1530039 discloses a product, suitable for the removal of heavy metals, transition metals and actinide metals from solution, obtained by reacting an inorganic solid containing surface hydroxyl groups in a first stage with a compound of formula (I)

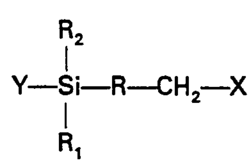

(I)

wherein R is a divalent organic group containing up to 20 carbon atoms, $R_1$ and $R_2$ are halogen atoms or organic radicals containing up to 20 carbon atoms, Y is a halogen atom or an $-OR^3$ group in which $R^3$ represents a H atom or an alkyl, aryl or acyl group containing up to 20 carbon atoms, and X is a halogen atom; and reacting the product of the first stage at elevated temperature with a polyamine of general formula (II)

$$NHR^4[(CR^5_2)_nNH]_m(CR^6_2)_nNHR^7 \qquad (II)$$

wherein $R^4$, $R^5$, $R^6$ and $R^7$ represent H atoms, alkyl or aryl groups containing up to 20 carbon atoms and may be the same or different, n is an integer between 1 and 5, and M is an integer between 1 and 5, or a polyamine of formula (III)

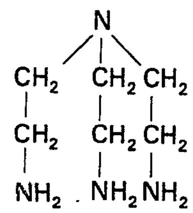

(III)

The composition contains amino functional groups and is believed to remove metals from solution by complex compound formation through donor ligands bonded to the inorganic surface.

Our co-pending EP—A—0 008 902 (European Patent Application No. 79301695.7) discloses a process for the production of a product derived from an inorganic oxide containing surface hydroxyl groups, containing groups of general formula (I) and/or (II):

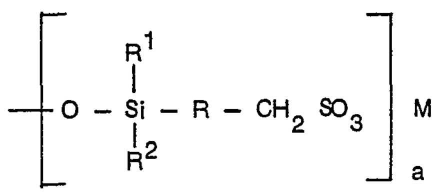

(I)

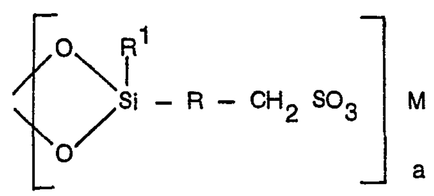

(II)

wherein R is a divalent radical containing up to 20 carbon atoms, $R^1$ and $R^2$ are alkoxy or aryloxy groups containing up to 20 carbon atoms, or hydrolysis products thereof, M is a metallic or hydrogen ion and (a) is an integer corresponding to the valency of M, which process comprises reacting an inorganic oxide containing surface hydroxyl groups in a first stage with a compound of formula (III)

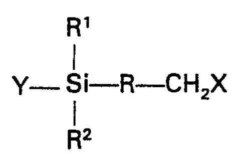

(III)

wherein R, $R^1$ and $R^2$ are as hereinbefore defined, Y is a halogen atom or an alkoxy or aryloxy group containing up to 20 carbon atoms and X is a halogen atom; and reacting the product of the first stage in a second stage with an aqueous solution of a water soluble inorganic sulphite to form a sulphonate salt; and optionally reacting the sulphonate salt of the second stage with dilute mineral acid in a third stage to form a product containing sulphonic acid groups.

Suitable inorganic oxides containing surface hydroxyl groups include alumina, titania, zirconia, glass, sepiolite and zeolitic molecular sieves. Preferably the inorganic oxide is silica and more preferably silica gel. In addition, mixtures of inorganic solids may be used. Unless they have been subjected to severe treatment e.g. heating above 1000°C, commercial silicas contain surface hydroxyl groups.

Preferably $R^1$ and $R^2$ are alkoxy groups containing 1 to 3 carbon atoms and R is a di- or tri-methylene group.

We have now discovered that this product is particularly suitable for use in the removal of metals from solution when the inorganic oxide is an oxidic silicon compound, M is an alkali metal ion and R is an alkylene radical containing up to 20 carbon atoms.

Thus, according to the present invention there is provided a process for the removal of metals from solution which process comprises contacting the solution with a product obtainable by means of

the process claimed in copending EP—A—0008902 (European patent application 79301695.1), containing groups of general formulae (I) and/or (II) bonded to an oxidic silicon compound which initially contained surface hydroxyl groups,

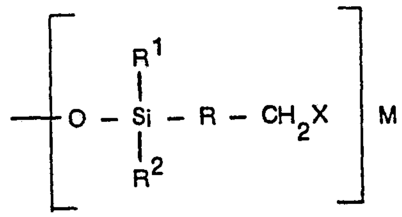

(I)

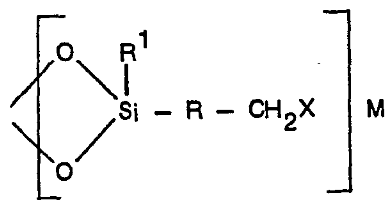

(II)

wherein R is an alkylene radical containing up to 20 carbon atoms, $R^1$ and $R^2$ are alkoxy or aryloxy groups containing up to 20 carbon atoms, or hydrolysis products thereof, and M is an alkali metal ion, characterised by the fact that X represents an $SO_3$ group.

Suitable oxidic silicon compounds containing surface hydroxyl groups are silica, glass, sepiolite or a zeolitic molecular sieve.

The metals may be removed from both aqueous and non-aqueous, e.g. liquid hydrocarbon, solutions.

It is clearly economically advantageous to operate at ambient temperature and in most cases, if not all, the product will function effectively at this temperature. It will also remove metals at higher temperature if the feedstock is supplied at elevated temperatures.

It is believed that the substrate removes the metals by ion exchange.

When the substrate loses its activity for removing metals it may either be disposed of without removing the metals or the metals may be removed by means known to those skilled in the art. One such method for removing the metal from the substrate is to contact the metal loaded substrate with an aqueous solution of an organic or inorganic acid followed by separation of the aqueous solution containing the metal from the substrate. The acid should be chosen so that the resulting metal salt is soluble in the treating solution.

Following regeneration in this manner, the substrate will be obtained in the acid form. It is then necessary to treat the acid form with a solution of the required metallic salt to obtain the alkali metal variant.

The solution containing metals may be contacted with the substrate batchwise, or, preferably, continuously by passing the solution over a bed of the substrate mounted in a suitable reactor.

The invention is illustrated by the following Examples in which Example 2 is provided for comparison.

A Preparation of Silica Functionalised with Sodium Sulphonate Groups

3-Chloropropyltrimethoxysilane (40 ml) was added, at room temperature, to a stirred suspension of 30—44 mesh silica (80 g) sold under the trade name Davison Grade 57 in toluene (200 ml). The reaction mixture was then heated to reflux temperature for 4 hours under a nitrogen atmosphere. After cooling, the silica product was isolated, Soxhlet extracted with methanol for 17 hours and then dried in vacuo. To this chloro-silica was added a saturated, aqueous solution of sodium sulphite (300 ml) and the mixture stirred at reflux temperature for 16 hours under a nitrogen atmosphere. After cooling, the silica was isolated by filtration and washed free from residual sodium sulphite with water and finally dried in vacuo. On analysis the sulphur content of this silica was found to be 1.6% wt.

B. Preparation of Silica Functionalised with Sulphonic Acid Groups

Sodium sulphonate-silica (prepared as described in A above) was acidified with 0.5 M nitric acid, washed free from residual nitric acid with water and finally dried in vacuo.

On analysis the sulphur content of this silica was found to be 1.8% wt.

Example 1

Jet A-1 aviation turbine kerosine containing 235—475 parts per billion of soluble copper was pumped, at room temperature and a liquid hourly space velocity of 10, through a 20 ml fixed bed of the

sodium sulphonate-silica (prepared as described in (A) above). Samples of the product leaving the reactor were periodically taken and analysed for their copper content. The sample times and the copper content of these samples are given in Table 1.

TABLE 1

| Time after which sample was taken (hours) | ppb Copper in Sample |
|---|---|
| 18 | < 10 |
| 66 | < 10 |
| 402 | < 10 |
| 810 | < 10 |
| 978 | < 10 |
| 1142 | < 10 |

Jet A-1 aviation turbine kerosine containing 215—325 parts per billion of soluble copper was pumped, at room temperature and at a liquid hourly space velocity of 10, through a 20 ml fixed bed of the sulphonic acid-silica (prepared as in B above). Samples of the liquid product leaving the reactor were periodically taken and analysed for their copper content. The sample times and the copper content of these samples are given in Table 2.

TABLE 2

| Time after which sample was taken (hours) | ppb Copper in Sample |
|---|---|
| 21 | < 10 |
| 45 | < 10 |
| 117 | < 150 |

**Claims**

1. A process for the removal of metals from solution which process comprises contacting the solution with a product containing groups of general formulae (I) and/or (II) bonded to an oxidic silicon compound which initially contained surface hydroxyl groups,

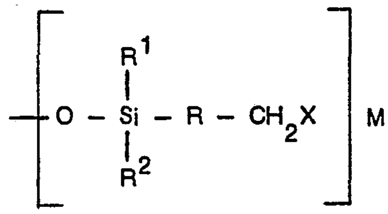

(I)

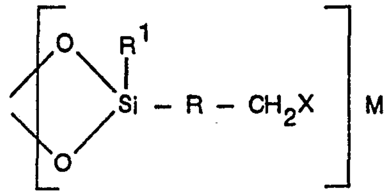

(II)

wherein R is an alkylene radical containing up to 20 carbon atoms, $R^1$ and $R^2$ are alkoxy or aryloxy groups containing up to 20 carbon atoms, or hydrolysis products thereof, M is an alkali metal ion and X represents an $SO_3$ group, said product being obtainable by means of a process which comprises reacting an oxidic silicon compound containing surface hydroxyl groups in a first stage with a compound of formula (III)

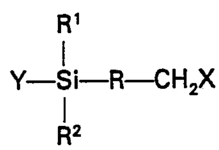

(III)

wherein R, $R^1$ and $R^2$ are as hereinbefore defined, Y is a halogen atom or an alkoxy or aryloxy group containing up to 20 carbon atoms and X is a halogen atom and reacting the product of the first stage in a second stage with an aqueous solution of a water soluble inorganic sulphite to form a sulphonate salt.

2. A process according to claim 1 wherein $R^1$ and $R^2$ are alkoxy groups containing 1 to 3 carbon atoms and R is a di-or tri-methylene group.

3. A process according to either of the preceding claims wherein the oxidic silicon compound containing surface hydroxyl groups is silica, glass, sepiolite or a zeolite molecular sieve.

4. A process according to any of the preceding claims wherein the process is operated at ambient temperature.

**Revendications**

1. Procédé pour extraire les métaux contenus dans une solution, procédé qui consiste à mettre la solution en contact avec un produit contenant des groupes de formules générales I et/ou II fixés sur un composé du type oxyde de silicium contenant à l'origine des groupes hydroxy en surface,

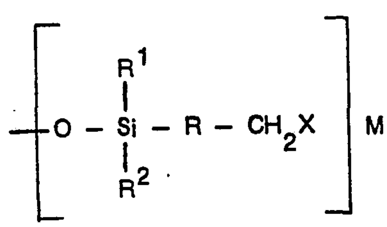

(I)

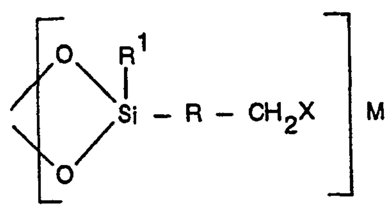

(II)

R représentant un radical alkylène contenant jusqu'à 20 atomes de carbone, $R^1$ et $R^2$ des groupes alcoxy ou aryloxy contenant jusqu'à 20 atomes de carbone, ou leurs produits d'hydrolyse, M un ion de métal alcalin et X représentant un groupe $SO_3$, ce produit pouvant être obtenu par un procédé qui consiste à faire réagir un composé du type oxyde de silicium portant en surface des groupes hydroxy, dans un premier stade, avec un composé de formule III

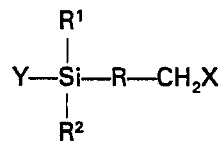

(III)

dans laquelle R, $R^1$ et $R^2$ ont les significations indiquées ci-dessus, Y représente un atome d'halogène ou un groupe alcoxy ou aryloxy contenant jusqu'à 20 atomes de carbone et X représentant un atome d'halogène et, dans un deuxième stade, ou fait réagir le produit obtenu au premier stade avec une solution aqueuse d'un sulfite minéral hydrosoluble, formant ainsi un sulfonate.

2. Un procédé selon la revendication 1, dans lequel $R^1$ et $R^2$ représentent des groupes alcoxy en C 1-C 3 et R représente un groupe di- ou tri-méthylène.

3. Un procédé selon l'une ou l'autre des revendications qui précèdent, dans lequel le composé du type oxyde de silicium portant en surface des groupes hydroxy consiste en silice, verre, sépiolithe ou un tamis moléculaire zéolithique.

4. Un procédé selon l'une quelconque des revendications qui précèdent, dans lequel on opère à température ambiante.

**Patentansprüche**

1. Verfahren zur Entfernung von Metallen aus einer Lösung, dadurch gekennzeichnet, daß die Lösung mit einem Produkt in Kontakt gebracht wird, das Gruppen der allgemeinen Formeln (I) und/oder (II)

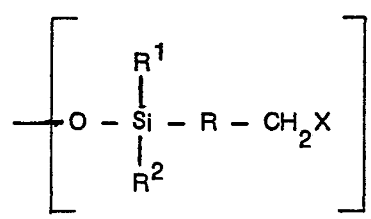

(I)

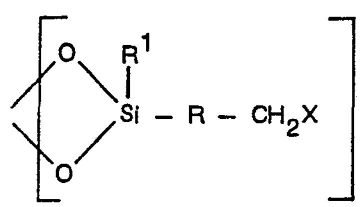

(II)

in denen

R ein bis zu 20 Kohlenstoff-Atome enthaltender Alkylen-Rest ist,

$R^1$ und $R^2$ bis zu 20 Kohlenstoff-Atome enthaltende Alkoxy- oder Aryloxy-Gruppen oder deren Hydrolyse-Produkte sind,

M ein Alkalimetall-Ion ist und

X eine $SO_3$-Gruppe bezeichnet,

gebunden an eine oxidische Silicium-Verbindung enthält, die ursprünglich Oberflächen-Hydroxyl-Gruppen enthielt, wobei dieses Produkt erhältlich ist mittels eines Verfahrens, bei dem eine oxidische Silicium-Verbindung, die Oberflächen-Hydroxyl-Gruppen enthält, in einer ersten Stufe mit einer Verbindung der Formel (III)

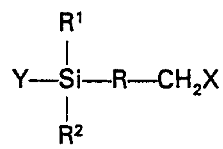

(III)

umgesetzt wird, in der

R, $R^1$ und $R^2$ die im Vorstehenden angegebenen Bedeutungen haben,

Y ein Halogen-Atom oder eine bis zu 20 Kohlenstoff-Atome enthaltende Alkoxy- oder Aryloxy-Gruppe ist und

X ein Halogen-Atom ist,

und bei dem das Produkt der ersten Stufe in einer zweiten Stufe mit einer wäßrigen Lösung eines wasserlöslichen anorganischen Sulfits unter Bildung eines Sulfonat-Salzes umgesetzt wird.

2. Verfahren nach Anspruch 1, dadurch gekennzeichnet, daß $R^1$ und $R^2$ bis 3 Kohlenstoff-Atome enthaltende Alkoxy-Gruppen sind und

R eine Di- oder Trimethylen-Gruppe ist.

3. Verfahren nach einem der vorhergehenden Ansprüche, dadurch gekennzeichnet, daß die Oberflächen-Hydroxyl-Gruppen enthaltende oxidische Silicium-Verbindung Siliciumdioxid, Glas, Sepiolith oder ein zeolithisches Molekularsieb ist.

4. Verfahren nach einem der vorhergehenden Ansprüche, dadurch gekennzeichnet, daß das Verfahren bei Umgebungstemperatur durchgeführt wird.